# EUROPEAN PATENT APPLICATION

(11) **EP 4 730 615 A1**
(43) Date of publication of application: **22.04.2026**
(21) Application number: 24206806.2
(22) Date of filing: 16.10.2024
(51) Int. Cl.: H02K 1/276, H02K 1/30, H02K 15/03

(54) **ROTOR, ASSEMBLY METHOD AND HOUSEHOLD APPLIANCE**

(71) Applicant: BSH Hausgeräte GmbH, 81739 München (DE)
(72) Inventor: Sabovcik, Milan, 07101 07101 (SK)

(57) **Abstract**

Disclosed is a hub-free rotor for use in an electric motor, wherein pole segments are directly attached to a magnetic insulative rotor core, an assembly method and a household appliance.

## Description

The present invention relates to a rotor for use in an electric motor, an assembly method and a household appliance.

Rotors for use in electric motors state of the art are shown in US 2016/0006303 A1 and US 2017/288486 A1. These documents show spoked rotors having a rotor hub, a plurality of magnets evenly arranged about the rotor hub and a plurality of pole segments evenly arranged about the rotor hub. Some pole segments have a first polarity and the other pole segments have a second polarity which is different to the first polarity. Each segment consists of a plurality of single metal sheets, so call laminations. The pole segments are attached to the rotor hub at their radial inner end via so called spoke connections, wherein in order to reduce a magnetic flux leakage, the US 2016/0006303 A1 describes a retention structure connecting the pole segments with the rotor hub comprises a body which is made from a magnetic insulative material is overmoulded over at least portions of the pole segments. The US 2017/288486 A1 describes a rotor hub made from a plastic material for connecting the pole segments, which is attached to the shaft preferably via injection moulding.

The object of the present invention is to propose an alternative rotor for use in an electric motor showing less or no magnetic flux leakage at its spoke connections, a method enabling a simplified assembly and a household application with a high-performance motor.

The object is achieved by a rotor with the features of claim 1, by an assembly method wit the features of claim 9 and by a household appliance with the features of claim 11. Advantageous embodiments are disclosed in the dependent claims, the description and the figures.

According to the invention, a rotor for use in an electric motor has a shaft with a non-magnetic rotor core, a plurality of magnets evenly arranged about the rotor core and a plurality of pole segments evenly arranged about the rotor core. The pole segments, which are in spoke connection with the rotor core alternate with the magnets, such that each of said magnets is positioned between adjacent pole segments.

According to the invention, an assembly method for a rotor according to one of the preceding claims proposes to join the rotor core and the shaft finally. Before pressing the shaft into the rotor core, the rotor core is fully equipped with the components such as pole segments, magnets, end sheets and connecting elements. This sequence simplifies the assembly. Preferably, the non-magnetic rotor core and the pole segments are provided. Then, the pole segments are connected to the rotor core and the magnets are inserted into the cavities between the pole segments. After that, the end sheets are attached to the assembled arrangegement and the connecting elements are inserted into the arrangement. Finally, the shaft is pressed through the rotor core.

By means of providing a rotor core which is fixed to the rotor shaft (shaft) of a non-magnetic material, a magnetic flux leakage (short cut) is prevented. This results in several advantages. First, efficiency of the magnetic flux in the rotor is increased. Second, the rotor core can be made of a stronger material than the pole segments. Third, as the pole segments are attached to the rotor core directly, this means without using a rotor hub or any retention ring as interface, the rotor can be more compact. In other word, the rotor core is a radially enlarged non-magnetic portion of the shaft which is adapted to receive the pole segments directly. The rotor core can be for instance one single non-magnetic part or a stack of non-magnetic sheets (laminated non-magnetic metal sheets), which is pressed or fixed of any other kind such as bonding or form fit engagement to the shaft.

In order to hold the pole segments in place axially, rotor end sheets ca be provided. Preferably, the end sheets (end laminations) abuts axially against the rotor core, such that they forming a kind of cage for the pole segments. In order to enhance the performance of the rotor, the end sheets are made of a magnetic insulative material.

Preferably, the rotor end sheets are connected to each other via axial connecting elements extending through openings of the pole segments. Exemplary connection elements are rods or pins. The connecting elements are used to hold the whole assembly in the axial direction and, in addition, to transmit most of the centrifugal force acting on the pole segments during operation to the end sheets. Preferably, each pole segments receives at least one connection element.

In order to hold the magnets in place radially between the adjacent pole segments, the pole segments can provide support structures. If the support structures extends in circumferential direction only, the magnets can be inserted in the cavities between the pole segments axially, which simplifies the rotor assembly. Exemplary support structures are stop faces protruding from the pole segments in opposite circumferential directions.

In order to enable the use of magnets which have a larger axial extension than the rotor core, the end sheets can have cutouts for receiving the magnets. The use of large magnets results in a more powerful motor compared to a motor with small magnets.

By means of locking elements provided by the end sheets, the magnets can be hold in place axially. Preferably, the locking elements are integral portions of the end sheets, for instance bendable latches. Such locking elements enables the holding of the magnets in at least axially without any moulding process, which has three advantages. First, the assembly is simplified. Second, a disassembly is simplified, and third, the weight of the rotor is reduced. Preferably, the locking elements are also adapted to secure the magnets radially.

In one embodiment, the pole segments are free of any radial outer connection structure such as bridge connections. By means of this, the assembly of the rotor is simplified.

In an alternative embodiment, radial outer connecting structures such as bridge connections are provided to support the pole segments mutually. The bridge connections can be provided between each pole segment or only between some of them. Through this, a mechanic stability of the rotor can be enhanced.

A household appliance according to the invention has an electric motor with a rotor according to the invention. An exemplary household appliance is a blender or a multifunctional cooking machine.

In the following, preferred embodiments of the present invention are explained with respect to the accompanying drawings. As is to be understood, the various elements and components are depicted as examples only, may be facultative and/or combined in a manner different than that illustrated. Reference signs for related elements are used comprehensively and not defined again for each figure. Shown is schematically in
- Fig. 1a: a perspective first view of a first embodiment of a rotor according to the invention;
- Fig. 1b: a perspective second view of the first embodiment;
- Fig. 1c: a side view of the first embodiment;
- Fig. 2: a cross-sectional view of the first embodiment;
- Fig. 3: an explosive view of the first embodiment;
- Fig. 4a: a perspective first view of a second embodiment of a rotor according to the invention;
- Fig. 4b: a perspective second view of the second embodiment; and
- Fig. 5: an explosive view of the second embodiment.

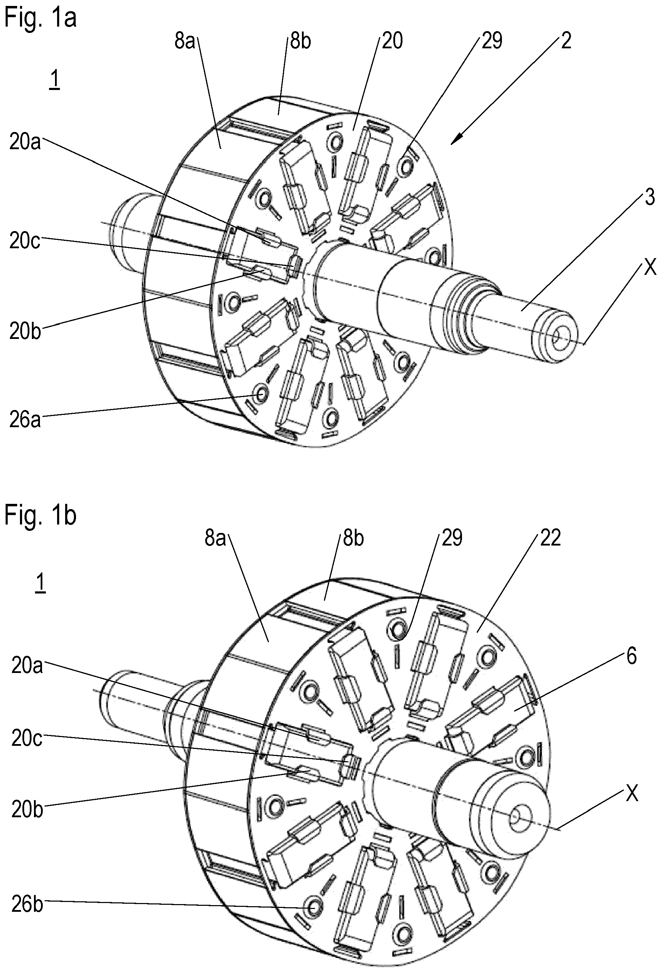

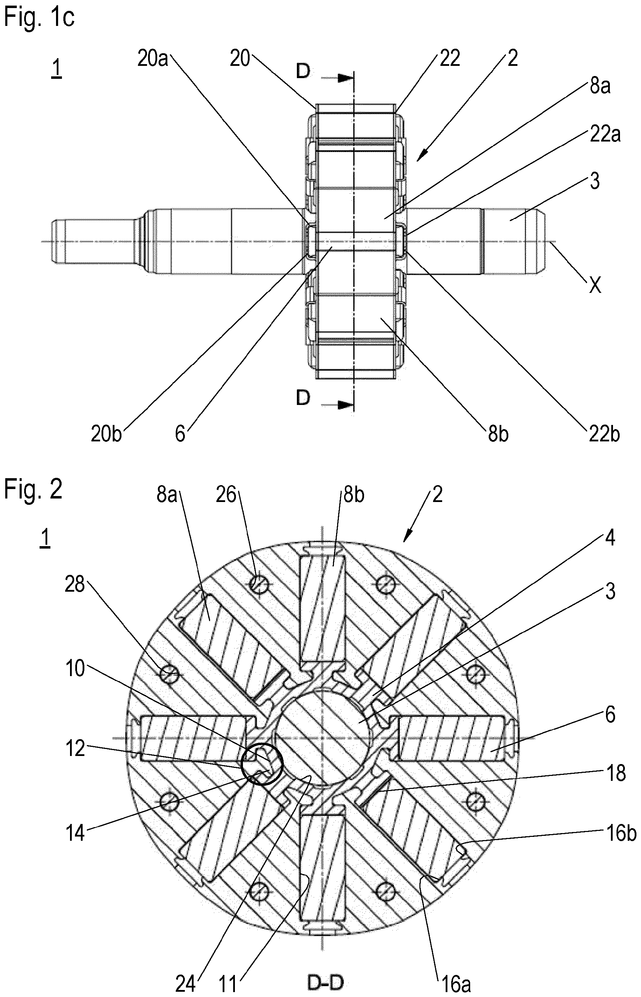

In Figures 1a, 1b, 1c and 2, a rotor packet 1 according to a first embodiment of the invention for use in an electric motor, for instance of a household appliance is shown. However, the motor can also be used in the field of automotive/industry application. For the sake of completeness, a rotor axis x is illustrated around which the rotor packet 1 is turning during operation of the electric motor.

The rotor packet 1 has a spoke rotor 2 according to the invention with a shaft 3, a rotor core 4, a plurality of magnets 6 evenly arranged about the rotor core 4 and a plurality of pole segments 8a, 8b evenly arranged about the rotor core 4.

The pole segments 8a, 8b have a triangular shape. They alternate with the magnets 6, in particular permanent magnets, such that each of said magnets 6 is positioned between adjacent pole segments 8a, 8b. As a consequence, adjacent pole segments 8a, 8b have different polarities. Some of them has a first polarity (north pole), whereas the remining pole segments 8b has a second polarity (south pole) which is different from the first polarity.

The rotor core 4 has a ring-like shape. It is non-magnetic and in this embodiment the rotor core 4 is made of a plurality of stacked sheets. Alternatively, the rotor core 4 is a single peace made from a non-magnetic material. The rotor core 4 is pressed onto the shaft 3 and forms the attachment area for the pole segments 8a, 8b. Therefore, at its outer diameter the rotor core 4 has retaining structures 10 to establish the spoke connections 12 of the pole segments 8a, 8b directly. The retaining structures 10 are evenly distributed around the rotor core 4 Here the retaining structures 10 are dovetail-shaped recesses for receiving corresponding protrusions 14 of the pole segments 8a, 8b at their inner radial diameter. However, alternatives retaining structures 10 are suitable as long as a required mechanical stability is given. Examples are structures having circular, a square or any other polygon-linke shape.

As mentioned above, all pole segments 8a, 8b are connected to the non-magnetic rotor core 4 directly via spoke connections 10. The pole segments 8a, 8b have a triangular-shape and made from the stacked metal sheets. The triangular shape of the pole segments 8a, 8b is such that between two adjacent pole segments 8a, 8b, rectangular-shaped cavities 11 for receiving the corresponding shaped magnets 6 are provided. Preferably, the pole segments 8a, 8b have the same axial extension as the rotor core 4.

In order to avoid any misplacement or misalignment of the magnets 6 between the pole segments 8a, 8b during operation due to centrifugal forces, radial outer support structures 16a, 16b are provided on the pole segments 8a, 8b. The support structures 16a, 16b extent in circumferential direction and form stop face for the magnets 6 in radial outwards direction. Here, each magnet 6 is hold by two opposite support structures which extend circumferentially from adjacent pole segments 8a, 8b in opposite direction.

Supporting the magnets at their radial inner diameter is realised by the rotor core 4. Therefore, the rotor core 4 has at its outer circumference appropriate support faces 18 between its adjacent recesses 10 for establishing the spoke connections 12.

In circumferential direction, the magnets are hold in place by lateral sides of the pole segments 8a, 8b.

In axial direction, the magnets 6 and pole segments 8a, 8b are hold in place via two end sheets 20, 22 and their locking elements 20a, 20b, 22a, 22b, respectively.

The end sheets 20, 22 are made from a magnetic insulative material. They are positioned on opposite sides of the rotor core 4 a form a kind of axially limitation for the pole segments 8a, 8b. They have a disc-like shape with an axial inner through hole 24 adapted to arrange the end sheets 20, 24 on the shaft 3. The through holes 24 have inner diameters which correspond to outer diameter of shaft portions adjacent to the rotor core 4. Their outer diameters correspond to an outer diameter established by the pole segments 8a, 8b attached to the rotor core 4.

In order to secure the end sheets to the shaft 3, axial connecting elements 26 are provided. The connecting elements 26 have a rod-like shape and extend through axial openings 28 of the pole segments 8a, 8b. With their end portions 26a, 26b, they are fed through axial holes 29 the end sheets 22, 24, wherein they are in form fit engagement with them, such that the poles segments 8a, 8b and the rotor core 4 is clamped axially between the end sheets 22, 24.

As the magnets 6 have a greater axial extension than the pole segments 8a, 8b, cutout 30 are provided in the end sheets 20, 22, The cutouts 30 have the same shape and radial orientation as the arranged magnets 6. In order to hold the magnets 6 axially in place, the locking elements 20a, 20b, 22a, 22b are provided. Each magnet 6 is hold axially in place via two pairs of opposite locking elements 20a, 20b, 22a, 22b. The locking elements 20a, 20b, 22a, 22b are integrally parts of the end sheets 20, 22 and extending in circumferential direction over the cutouts 30 partially. They are facing each other and are positioned laterally the cutouts 30 half way up radially. Preferably, the locking elements 20a, 20b, 22a, 22b are bended lashes.

In order to secrete magnets 6 additionally in axial directions and also in radial direction, additional lash-like locking elements 20c, 22c, can be provided at the radial inner side of the cutouts 30.

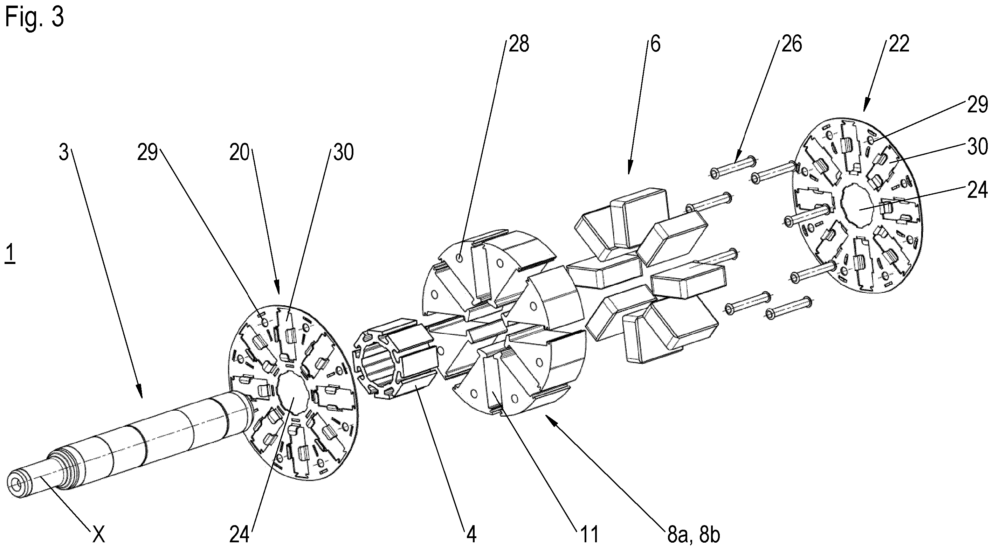

In Figure 3, an explosive view of the rotor packet 1 according to the first embodiment is illustrated. According to a preferred assembly method, first the non-magnetic rotor core 4 and the pole segments 8a, 8b are provided. Then, the spoke connections 12 are established by attaching the pole segments 8a, 8b to the rotor core 4. After that, the magnets 6 are positioned in the cavities 11 between the poles segments 8a, 8b. Now, the end sheets 20, 22 are attached to the assembled arrangegement 4, 6, 8a, 8b. In a next step, the connecting elements 26 are inserted. As a consequence, the arrangement is mechanically stabilised and compact. Finally, the shaft 3 is pressed in the rotor core 4. Finally, the locking elements 20a, 20b, 20c, 22a, 22b, 22c are brought in form fit engagement with the magnets 6 via bending.

It should be noted that it is also possible to position and/or secure the end sheets 20, 22 on the shaft 3 first and then, afterwards the magnets 6 are arranged in the cavities 11 between the pole segments 8a, 8b.

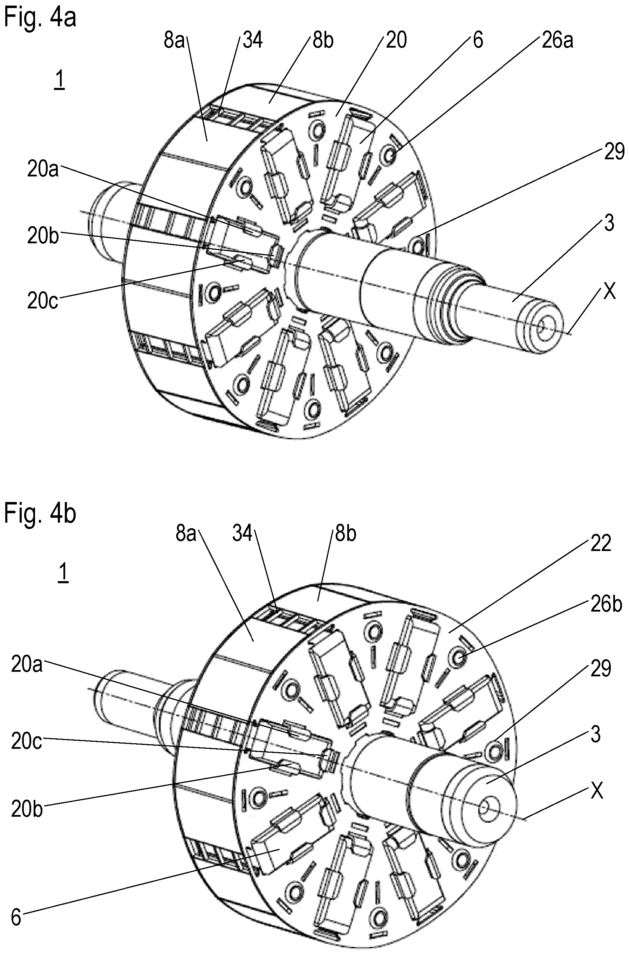

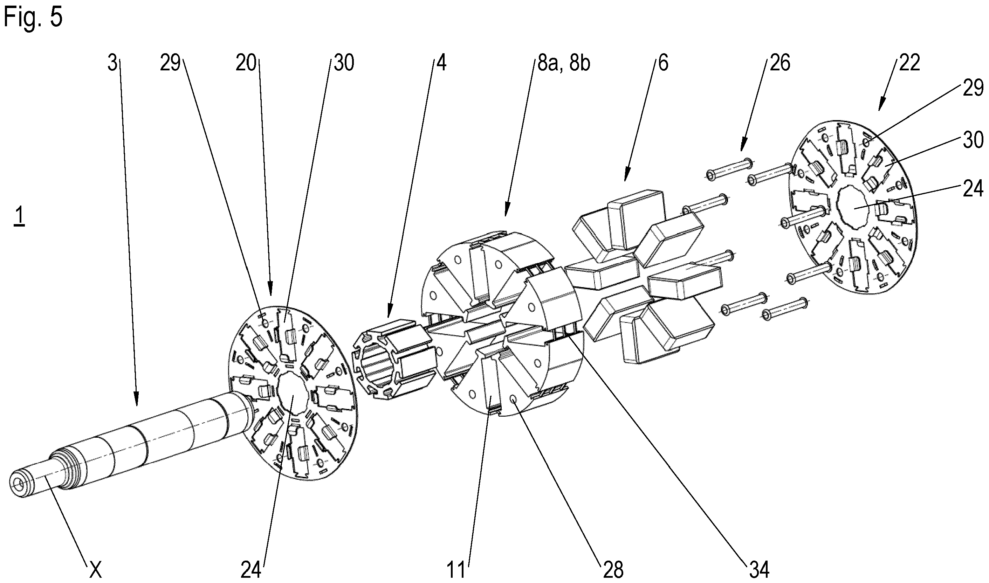

In Figures 4a, 4b and 5 a rotor packet 1 according to a second embodiment of the invention for use in an electric motor, for instance of a household appliance is shown. The second embodiment comprises the same components and mainly the same assembly steps so that for the sake of clarity only the difference is explained below.

In contrast to the first embodiment shown in Figures 1 to 2, according to the second embodiment adjacent pole segments 8a, 8b are in radial outer connection with each other. This is realised by a support structure called bridge connections 34. The bridge connections 34 extend in circumferential direction and have the shape of longitudinal rods. Here, three bridge connections 34 are provided between adjacent pole segments 8a, 8b.

Disclosed is a hub-free rotor for use in an electric motor, wherein pole segments are directly attached to a magnetic insulative rotor core, an assembly method and a household appliance.

### Reference signs

1 rotor packet
2 rotor
3 shaft
4 rotor core
6 magnet
8a pole segment of a first polarity (north pole)
8b pole segments of a second polarity (south pole)
10 retaining structure (recess)
11 cavity
12 spoke connection
14 corresponding protrusions
16a,b support structure (radial outer)
18 support structure (radial inner)
20 end sheet / end plate
20a, b, c locking element (end sheet 20)
22 end sheet / end plate
22a, b, c locking element (end sheet 22)
24 axial through hole
26 axial connecting element
26a, b end portion (connecting element)
28 axial openings
29 axial hole for connection element
30 cutout
34 bridge connection
x longitudinal direction (rotor axis)

## Claims

1. A rotor (2) for use in an electric motor, comprising:
• a shaft (3) with a non-magnetic rotor core (4);
• a plurality of magnets (6) evenly arranged about the rotor core (4); and
• a plurality of pole segments (28a, 8b) evenly arranged about the rotor core (4);
• said pole segments (8a, 8b)
▪ alternate with said magnets (6), such that each of said magnets (6) is positioned between adjacent pole segments (8a, 8b); and
▪ are in spoke connection with the rotor core (4).

2. The rotor according to claim 1, wherein non-magnetic end sheets (20, 22) are provided for holding the pole segments (8a, 8b) axially.

3. The rotor according to claim 2, wherein the rotor end sheets (20, 22) are connected to each other via axial connecting elements (26) extending through opening (28) of the pole segments (8a, 8b).

4. The rotor according to claims 1, 2 or 3, wherein the magnets (6) are hold in place radially via support structures (16a, 16b) of the pole segments (8a, 8b).

5. The rotor according to any of the claims 1 or 4, wherein the end sheets (20, 22) have cutouts (30) for receiving the magnets (6).

6. The rotor according to any of the claims 1 or 5, wherein the magnets (6) are hold in place axially by locking elements (20a, 20b, 20c, 22a, 22b, 22c) of the end sheets (20, 22).

7. The rotor according to any of the preceding claims, wherein the pole segments (8a, 8b) are free of any radial outer connection structure.

8. The rotor according to any of the preceding claims 1 to 7, wherein bridge connections (34) are provided to support the pole segments (8a, 8b) mutually.

9. An assembly method for a rotor according to one of the preceding claims, wherein the rotor core (4) and the shaft (3) are joined after the rotor core (4) is equipped with pole segments (8a, 8b), magnets (6), end sheets (22a, 22b) and connecting elements (26).

10. The assembly method according to claim 9, comprising the steps:
• Providing a non-magnetic rotor core (4);
• Providing pole segments (8a, 8b);
• Connecting the pole segments (8a, 8b) to the rotor core (4).
• Inserting magnets (6) in cavitis (11) between the poles segments (8a, 8b);
• Attaching end sheets (20, 22) to the assembled arrangegement (4, 6, 8a, 8b);
• Inserting connecting elements (26) into the arrangement (4, 6, 8a, 8b); and
• Pressing the shaft (3) in the rotor core (4).

11. A household appliance with an electric motor having a rotor (2) according to one of the preceding claims.
